# FASCICULE DE BREVET EUROPEEN

(11) **EP 2 129 976 B1**
(45) Date de publication et mention de la délivrance du brevet: **13.07.2016**
(21) Numéro de dépôt: 08787787.4
(22) Date de dépôt: 13.03.2008
(51) Int. Cl.: F25B 21/00

(54) **PROCEDE ET DISPOSITIF POUR ACCROITRE LE GRADIENT DE TEMPERATURE DANS UN GENERATEUR THERMIQUE MAGNETOCALORIQUE**
VERFAHREN UND VORRICHTUNG ZUR ERHÖHUNG EINES TEMPERATURGRADIENTEN IN EINEM MAGNETOKALORISCHEN WÄRMEGENERATOR
METHOD AND DEVICE FOR INCREASING A TEMPERATURE GRADIENT IN A MAGNETOCALORIC THERMAL GENERATOR

(30) Priorité: 19.03.2007 FR 0701958
(43) Date de publication de la demande: 09.12.2009
(73) Titulaire: Cooltech Applications S.A.S., 67810 Holtzheim (FR)
(72) Inventeur: CRAMET, Nicolas, F-67000 Strasbourg (FR); DUPIN, Jean-Louis, F-68320 Muntzenheim (FR); HEITZLER, Jean-Claude, F-68180 Horbourg-Wihr (FR); MULLER, Christian, F-67000 Strasbourg (FR)
(74) Mandataire: Nithardt, Roland
(86) Numéro de dépôt international: PCT/FR2008/000329
(87) Numéro de publication internationale: WO 2008/132342

(56) Documents cités:
- EP-A- 1 736 717
- WO-A-03/009314
- WO-A-03/016794
- WO-A-2004/059221
- WO-A-2008/012411
- US-A- 4 507 927
- US-B1- 6 588 216
- LI ET AL: "A practical model for analysis of active magnetic regenerative refrigerators for room temperature applications" INTERNATIONAL JOURNAL OF REFRIGERATION, ELSEVIER, PARIS, FR, vol. 29, no. 8, 22 novembre 2006 (2006-11-22), pages 1259-1266, XP005775726 ISSN: 0140-7007
- OKAMURA ET AL: "Performance of a room-temperature rotary magnetic refrigerator" INTERNATIONAL JOURNAL OF REFRIGERATION, ELSEVIER, PARIS, FR, vol. 29, no. 8, 22 novembre 2006 (2006-11-22), pages 1327-1331, XP005775734 ISSN: 0140-7007

## Description

### Domaine technique :

La présente invention concerne un procédé pour accroître le gradient de température dans un générateur thermique magnétocalorique comportant d'une part des éléments magnétocaloriques fixes et des moyens magnétiques disposés pour soumettre alternativement lesdits éléments magnétocaloriques à une variation de champ magnétique entre une valeur de champ maximale et une valeur de champ minimale pour faire varier la température desdits éléments magnétocaloriques, et d'autre part des moyens pour collecter les calories et/ou les frigories émises par lesdits éléments magnétocaloriques, ces moyens comportant au moins un circuit d'au moins un fluide caloporteur circulant dans une direction parallèle à celle de la variation de champ magnétique.

La présente invention concerne un dispositif pour accroître le gradient de température dans un générateur thermique magnétocalorique comportant d'une part des éléments magnétocaloriques fixes et des moyens magnétiques disposés pour soumettre alternativement lesdits éléments magnétocaloriques à une variation de champ magnétique entre une valeur de champ maximale et une valeur de champ minimale pour faire varier la température desdits éléments magnétocaloriques, et d'autre part des moyens pour collecter les calories et/ou les frigories émises par lesdits éléments magnétocaloriques, ces moyens comportant au moins un circuit d'au moins un fluide caloporteur circulant dans une direction parallèle à celle de la variation de champ magnétique.

### Technique antérieure:

Ces nouveaux générateurs thermiques qui utilisent l'effet magnétocalorique de certains matériaux offrent une alternative écologique très intéressante aux générateurs classiques voués à disparaître dans le contexte du développement durable et de la réduction de l'effet de serre. Pour que ces générateurs soient économiquement rentables et puissent offrir un bon rendement énergétique, il est théoriquement envisageable d'agir sur divers paramètres. L'un de ces paramètres est l'intensité du champ magnétique. En effet, l'augmentation du champ magnétique entraîne une augmentation de la capacité de réaction des éléments magnétocaloriques, ce qui a pour effet d'augmenter le rendement du générateur. Or, augmenter de façon conséquente la puissance des aimants pour accroître l'intensité du champ magnétique généré par ces aimants représente, de façon connue, un coût souvent exorbitant, qui n'est pas acceptable d'un point de vue économique.

Un autre paramètre sur lequel on peut théoriquement agir est le gradient de température des éléments magnétocaloriques qui est faible puisqu'il n'est que de quelques degrés par Tesla et dépend de la nature des matériaux magnétocaloriques sélectionnés. En effet, augmenter le gradient de température à l'intérieur du générateur thermique magnétocalorique permet d'augmenter efficacement le rendement calorifique du système. D'un point de vue économique, une action sur ce deuxième paramètre apparaît plus attrayante étant donné que l'augmentation du gradient de température est nettement plus économique que l'augmentation du champ magnétique, ce qui la rend plus adaptée à une application industrielle élargie.

Dans les générateurs magnétocaloriques décrits dans les publications EP 1 736 717 et WO 2004/059221, l'élément thermique est mobile et constitué d'une roue en matériau magnétocalorique poreux, et l'aimant est fixe et disposé pour créer un champ magnétique sur une demi-portion de la roue délimitant ainsi une zone magnétique générant de la chaleur et une zone non magnétique générant du froid.

L'élément thermique mobile est traversé axialement par un circuit de fluide caloporteurs chaud et un circuit de fluide caloporteur froid circulant en sens inverse et perperidiculairement au champ magnétique, ces circuits étant raccordés à des circuits extérieurs par des joints tournants. Le fluide caloporteur est principalement de l'air dont la conductibilités thermique a un rapport de 1 à 30 par rapport à un liquide comme de l'eau et doit par conséquent circuler à une vitesse très supérieure à la vitesse de rotation de la roue pour récupérer l'énergie thermique. Pour améliorer le rendement énergétique d'un tel générateur, on doit par ailleurs réduire l'inertie thermique engendré par le fluide caloporteur chaud qui entre en zone froide et par le fluide caloporteur froid qui entre en zone chaude lorsque la roue tourne, en décalant l'entrée du fluide chaud par rapport à son entrée dans la zone magnétique et l'entrée du fluide froid par rapport à son entrée dans la zone non magnétique.

Le générateur décrit dans la publication WO 2008/012411, appartenant au même déposant, présente une configuration inversée par rapport à celle décrite ci-dessus. Le module thermique est fixe, ce qui simplifie la conception des circuits de fluide caloporteur étant donné qu'il n'y a plus besoin de raccords tournants, et les aimants sont mobiles ou agencés pour créer un champ magnétique mobile ou variable par rapport au module thermique fixe. Le ou les fluides caloporteurs, qui sont majoritairement un liquide tel que de l'eau dont la conductibilité thermique est 30 fois supérieure à celle d'un gaz comme de l'air, circulent radialement dans le module thermique, dans une direction parallèle au champ magnétique et sensiblement à la même vitesse, pour collecter le chaud ou le froid généré par les éléments magnétocaloriques au fur et à mesure du déplacement des aimants ou de la variation du champ magnétique. Pour améliorer le rendement énergétique d'un tel générateur, on multiplie les surfaces d'échange en empilant plusieurs éléments magnétocaloriques sous forme de plaques, délimitant entre eux les canaux de circulation du fluide caloporteur, à la manière d'un mini ou d'un micro échangeur.

Aucun générateur magnétocalorique connu ne propose d'agir directement sur le gradient de température des éléments magnétocaloriques en tant que tel.

### Exposé de l'invention :

La présente invention se propose d'améliorer le rendement énergétique d'un générateur thermique magnétocalorique tel que défini en préambule en augmentant son gradient de température, tout en respectant les contraintes économiques imposées et en réalisant un générateur efficace, simple à construire et à entretenir, bon marché à l'acquisition et à l'utilisation.

Dans ce but, le procédé selon l'invention tel que défini en revendication 1 est caractérisé en ce que l'on effectue au moins un préchauffage et/ou un pré-refroidissement des éléments magnétocaloriques pour modifier leur température initiale avant et/ou pendant la variation de champ magnétique avant d'atteindre la valeur de champ maximale ou minimale.

Ce préchauffage et/ou ce pré-refroidissement a pour effet d'anticiper respectivement la montée et la baisse de température des éléments magnétocaloriques lorsqu'ils sont soumis à une variation de champ magnétique, ce qui a pour conséquence une augmentation du gradient de température et par suite une amélioration du rendement du système.

Selon l'invention, le fluide caloporteur étant une solution liquide, pour effectuer au moins un préchauffage et/ou un pré-refroidissement des éléments magnétocaloriques, l'on utilise ledit fluide caloporteur que l'on fait circuler dans ledit circuit pour collecter les calories et/ou les frigories émises par lesdits éléments magnétocaloriques à une vitesse supérieure à vitesse de déplacement des assemblages magnétiques.

Grâce à cette différence de vitesse, le fluide caloporteur a un temps d'avance par rapport au flux magnétique et a pour effet de préchauffer ou de pré refroidir, selon le circuit concerné, les éléments magnétocaloriques avant leur magnétisation ou leur démagnétisation, augmentant ainsi le gradient de température entre les températures d'entrée et de sortie desdits fluides.

Selon un premier mode de mise en oeuvre avantageux du procédé, dans lequel on fait circuler un premier fluide caloporteur dans un premier circuit collecteur dit « chaud » et un deuxième fluide caloporteur dans un deuxième circuit collecteur dit « froid », l'on peut faire circuler ledit premier fluide caloporteur dans le circuit chaud à une vitesse supérieure à la vitesse de déplacement des assemblages magnétiques.

Selon un deuxième mode de mise en oeuvre avantageux du procédé, dans lequel on fait circuler un premier fluide caloporteur dans un premier circuit collecteur dit « chaud » et un deuxième fluide caloporteur dans un deuxième circuit collecteur dit « froid », l'on peut faire circuler ledit deuxième fluide caloporteur dans le circuit froid à une vitesse supérieure à la vitesse de déplacement des assemblages magnétiques.

L'on fait avantageusement varier la vitesse de circulation dudit premier fluide caloporteur dans ledit circuit chaud au moyen d'une pompe de circulation pilotée par un boîtier de commande et l'on fait avantageusement varier la vitesse de circulation dudit deuxième fluide caloporteur dans ledit circuit froid au moyen d'une pompe de circulation pilotée par un boîtier de commande.

Enfin, on fait circuler ledit fluide caloporteur dans ledit circuit pour collecter les calories et/ou les frigories émises par lesdits éléments magnétocaloriques à une vitesse supérieure à la vitesse de la variation de champ magnétique en modulant la vitesse de déplacement des assemblages magnétiques.

Dans ce but également, le dispositif selon l'invention tel que défini en revendication 9 est caractérisé en ce qu'il comporte des moyens pour effectuer au moins un préchauffage et/ou un pré-refroidissement des éléments magnétocaloriques pour modifier leur température initiale avant et/ou pendant la variation de champ magnétique avant d'atteindre la valeur de champ maximale ou minimale.

Dans l'invention, ledit fluide caloporteur est une solution liquide, et le dispositif comporte des moyens pour faire circuler ledit fluide caloporteur dans ledit circuit pour collecter les calories et/ou les frigories émises par lesdits éléments magnétocaloriques à une vitesse supérieure à la vitesse de déplacement des assemblages magnétiques.

Selon une première manière avantageuse de réaliser l'invention, le dispositif comprenant un premier circuit collecteur dit « chaud » dans lequel circule un premier fluide caloporteur et un deuxième circuit collecteur dit « froid » dans lequel circule un deuxième fluide caloporteur, comporte des moyens pour faire circuler ledit premier fluide caloporteur dans le circuit chaud à une vitesse supérieure à la vitesse de déplacement des assemblages magnétques.

Selon une deuxième manière avantageuse de réaliser l'invention, le dispositif comprenant un premier circuit collecteur dit « chaud » dans lequel circule un premier fluide caloporteur et un deuxième circuit collecteur dit « froid » dans lequel circule un deuxième fluide caloporteur; comporte des moyens pour faire circuler ledit deuxième fluide caloporteur dans le circuit froid à une vitesse supérieure à la vitesse de déplacement des assemblages magnétques.

Selon un mode de réalisation particulièrement avantageux, ledit circuit chaud comporte une pompe de circulation pilotée par un boîtier de commande et ledit circuit froid comporte une pompe de circulation pilotée par un boîtier de commande.

Selon une autre forme de réalisation, ledit générateur thermique comporte un arbre rotatif portant des assemblages magnétiques et un actionneur agencé pour piloter la vitesse d'entraînement de cet arbre et créer une vitesse de déplacement des assemblages magnétques. différente de la vitesse de circulation dudit fluide caloporteur.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 est une vue éclatée d'une forme de réalisation particulière d'un générateur thermique selon l'invention,
- la figure 2 est une vue en perspective d'un exemple de module thermique pouvant entrer dans la réalisation du générateur de la figure 1,
- la figure 3 est une vue en plan d'une forme de réalisation d'un support d'éléments magnétocaloriques pour le générateur thermique selon l'invention,
- la figure 4 est un graphique de température par rapport au temps du fluide caloporteur dans les circuits chaud et froid lorsque la vitesse du fluide est égale à la vitesse des aimants, selon l'état de la technique,
- la figure 5 est un graphique similaire à la figure 4 lorsque la vitesse du fluide est supérieure à la vitesse des aimants, selon l'invention,
- les figures 6A et 6B sont des schémas illustrant le fonctionnement des éléments magnétocaloriques sans préchauffage, conformément à l'art antérieur, et
- les figures 7A et 7B sont des schémas illustrant le fonctionnement des éléments magnétocaloriques avec préchauffage selon l'invention.

### Illustration de l'invention :

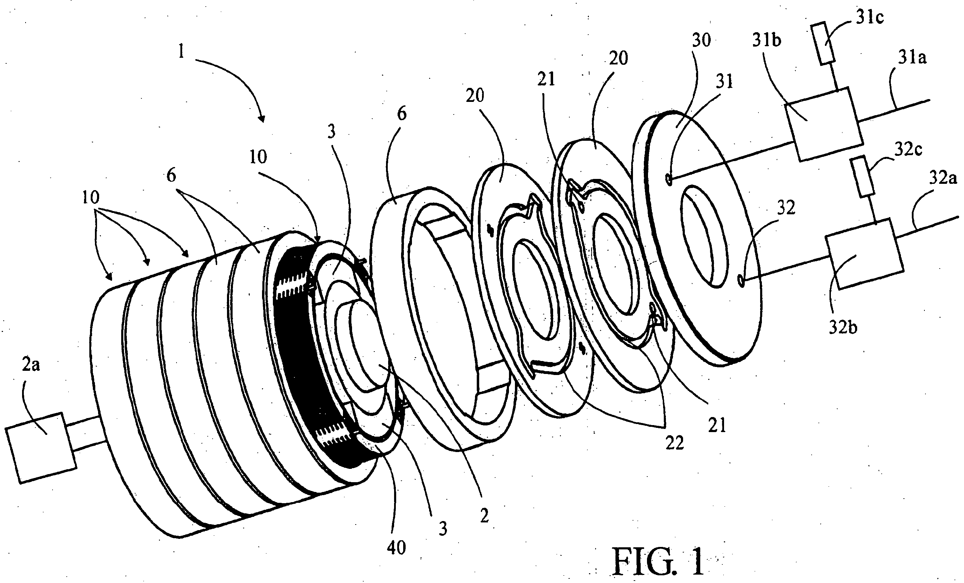

Le procédé pour accroître le gradient de température dans un générateur thermique magnétocalorique selon l'invention peut par exemple, mais non exclusivement, s'appliquer dans un générateur thermique magnétocalorique tel que décrit dans la publication WO 2008/012411 et tel que représenté par les figures 1 à 3. Cet exemple n'est pas limitatif et le procédé peut s'étendre à tout autre type de générateur magnétocalorique, dans lequel les moyens magnétiques sont mobiles pour créer un champ magnétique mobile par rapport aux éléments magnétocaloriques qui sont fixes, dans lequel le ou les fluides caloporteurs, qui sont majoritairement un liquide tel que de l'eau, circulent dans une direction parallèle au déplacement du champ magnétique et sensiblement à la même vitesse pour collecter le chaud ou le froid généré par les éléments magnétocaloriques au fur et à mesure.

Le générateur thermique magnétocalorique 1 représenté par les figures 1 à 3 comporte par exemple un ensemble de modules thermiques 10 empilés, raccordés par des disques répartiteurs 20 et obturés par des flasques de fermeture 30 montés de part et d'autre de l'empilement. Le nombre des modules thermiques 10 est variable et leur forme de réalisation peut être modifiée en fonction des performances recherchées. Chaque module thermique 10 est constitué de supports 40 portant un ensemble d'éléments magnétocaloriques 60, ces supports 40 étant empilés axialement et agencés pour délimiter entre eux des canaux de circulation, orientés radialement, pour un ou plusieurs fluides caloporteurs correspondant à un ou plusieurs circuits collecteurs. On peut notamment varier la plage de température de fonctionnement des éléments magnétocaloriques 60 en fonction de la nature, notamment de la composition chimique de ces matériaux, ainsi que le débit et la vitesse de déplacement des fluides caloporteurs en fonction de la section des canaux dans lesquels circulent ces fluides et/ou de leur pression.

Le flasque de fermeture 30 représenté comporte par exemple deux orifices respectivement 31, 32, destinés à être raccordés respectivement à un circuit collecteur extérieur chaud 31a et à un circuit collecteur extérieur froid 32a (représentés schématiquement) qui véhiculent respectivement les calories et les frigories produites par,le générateur 1. Ces circuits collecteurs 31a, 32a comprennent chacun des moyens pour faire circuler chaque fluide caloporteur dans le circuit correspondant pour collecter respectivement les calories et/ou les frigories émises par lesdits éléments magnétocaloriques 60. En l'occurrence ces moyens peuvent comporter une pompe de circulation, respectivement 31 b et 32b ou tout autre élément équivalent. Ces moyens sont respectivement pilotés par des boîtiers de commande 31c et 32c agencés pour moduler la vitesse de circulation des fluides caloporteurs dans les deux circuits 31a et 32a en fonction de la demande de l'utilisateur. Cette demande peut être effectuée de façon programmée ou ponctuellement selon les besoins momentanés.

Les disques répartiteurs 20 comportent des orifices 21 et des rainures de distribution 22 permettant de raccorder en série, en parallèle ou selon une combinaison série/parallèle, les circuits respectivement chaud et froid des différents modules thermiques 10 entre eux et avec les circuits collecteurs extérieurs 31a, 32a respectivement chaud et froid. Ces disques répartiteurs 20 peuvent être doublés et dédiés chacun à un des circuits collecteurs. Ils peuvent aussi être formés de disques simples à double face (non représentés) avec un agencement particulier d'orifices 21 et de rainures 22 de distribution pour réaliser une fonction similaire.

Dans l'exemple représenté, le générateur thermique 1 comporte un arbre central 2 portant deux assemblages magnétiques 3 diamétralement opposés, et entraînés en rotation par un actionneur 2a, par exemple un moteur électrique Dans l'exemple représenté, cet actionneur 2a est agencé pour entraîner les assemblages magnétiques 3 en rotation, mais le mouvement pourrait également être effectué en translation. En outre, bien qu'il soit préférentiellement continu, le déplacement peut également être discontinu, alternatif ou défini selon un programme complexe en fonction des besoins. Le nombre, la position et le type d'assemblages magnétiques 3 peuvent être déterminés en fonction de la construction des modules thermiques 10. Ces assemblages magnétiques 3 peuvent être formés d'aimants permanents, d'électroaimants, de supraconducteurs ou tout autre type d'aimant. Les aimants sont de préférence des aimants permanents en raison de leur dimensionnement, leur simplicité d'utilisation et leur coût. Ces aimants permanents peuvent être pleins, frittés, collés ou feuilletés, associés à un ou plusieurs matériaux magnétisables concentrant et dirigeant leurs lignes de champ magnétique. Les modules thermiques 10 peuvent être entourés d'une armature 6 réalisée de préférence en un matériau ferromagnétique ayant pour fonction principale de refermer le flux magnétique généré par les assemblages magnétiques 3. Les modules thermiques 10 peuvent être assemblés selon un montage serré par tout moyen connu, comme par exemple des tirants (non représentés) s'étendant entre les deux flasques de fermeture 30, ou des brides de serrage (non représentées) montées sur l'arbre 2 au moyen de paliers. Tout autre mode d'assemblage peut être envisagé, l'essentiel étant d'assurer un maintien mécanique des modules thermiques 10 entre eux ainsi que l'étanchéité des circuits collecteurs chaud et froid internes au générateur.

Dans l'exemple illustré, le générateur thermique 1 présente une configuration circulaire, c'est-à-dire que les modules thermiques 10 sont annulaires et disposés autour d'un arbre 2 portant les assemblages magnétiques 3. Toutefois, l'invention s'étend également à un générateur thermique ayant une configuration rectiligne (non représentée) dans laquelle les modules thermiques sont disposés linéairement et les moyens magnétiques sont animés d'un mouvement de translation alternatif ou séquentiel.

Dans l'exemple représenté, chaque support 40 comporte un ensemble d'éléments magnétocaloriques 60 successifs, portés par une pièce de support 70, la surface occupée par les éléments magnétocaloriques 60 étant majoritaire par rapport à celle de la pièce de support 70. Ces éléments magnétocaloriques 60 sont parallèles au sens de circulation du fluide et au déplacement des aimants. Ils sont en forme de secteur circulaire et par exemple réalisés en plaque de matériau magnétocalorique découpée, usinée ou moulée. Le choix des matériaux magnétocaloriques est fonction des puissances caloriques et frigorifiques recherchées et des plages de température de fonctionnement requises.

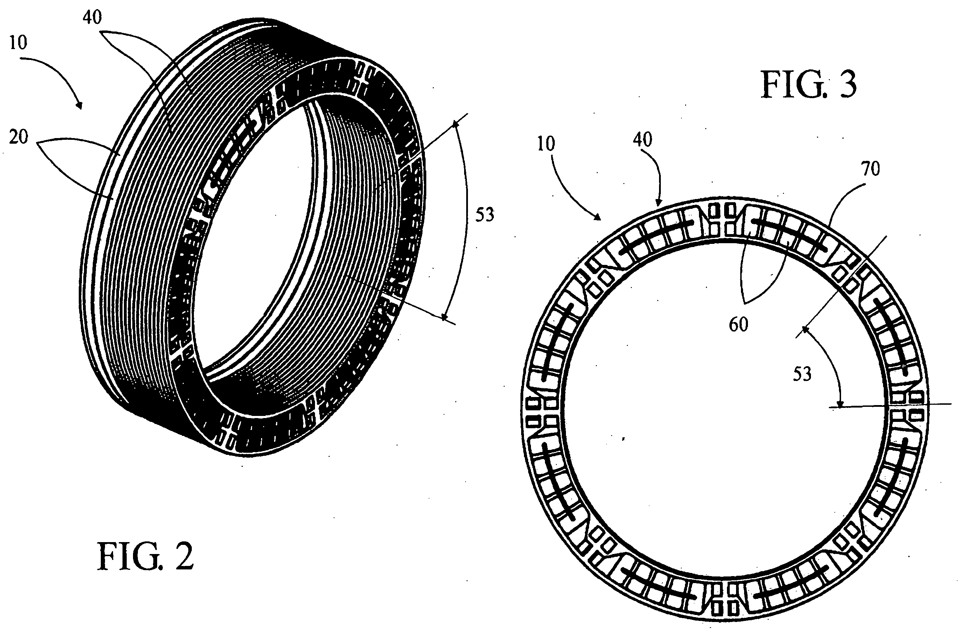

Les supports 40 peuvent avoir diverses configurations. Sur la figure 3, le support 40 comporte plusieurs secteurs thermiques 53 distincts, identiques s'étendant sur environ 45°, chacun composé d'un même nombre d'éléments magnétocaloriques 60, cette configuration n'étant pas limitative. De même, ces éléments magnétocaloriques 60 en forme de secteurs circulaires peuvent avoir des formes géométriques quelconques et leur composition peut être variée notamment en fonction des plages de températures recherchée. Cet exemple n'est pas limitatif. Le support 40 peut aussi être une pièce moulée dans une matière synthétique chargée avec des particules de matériau magnétocalorique.

La présente invention propose d'augmenter le gradient de température des éléments magnétocaloriques 60 en les préchauffant ou en les pré refroidissant par tous moyens appropriés pour modifier leur température initiale et anticiper les cycles de magnétisation ou de démagnétisation.

La solution décrite en détail ci-après consiste à utiliser le fluide caloporteur comme élément de préchauffage ou de pré refroidissement des éléments magnétocaloriques en décalant la vitesse de circulation du fluide par rapport à celle du champ magnétique, ce qui est possible de faire dans le générateur du type de celui de l'invention puisque le fluide circule dans une direction parallèle à celle du champ magnétique, et impossible à réaliser dans le générateur du type de celui décrit dans les publications EP 1 736 717 et WO 2004/05922 déplacement des assemblages magnétiques. Cette solution est très avantageuse étant donné qu'elle permet de s'affranchir de tout autre moyen de chauffage et/ou de refroidissement additionnel.

Selon la présente invention, l'on fait circuler ledit fluide caloporteur dans le module thermique 10 pour collecter les calories et/ou les frigories émises par lesdits éléments magnétocaloriques 60 à une vitesse supérieure à la vitesse de déplacement des assemblages magnétiques pour anticiper les cycles de magnétisation et de démagnétisation des éléments magnétocaloriques 60.

D'une manière générale, au moment de la pénétration d'un élément magnétocalorique 60 dans le champ magnétique sa température passe d'une valeur initiale Ti à une valeur finale Tf = Ti + ΔT. La valeur du gradient de température ΔT est constante pour une intensité du champ magnétique donnée et pour une composition déterminée du matériau magnétocalorique.

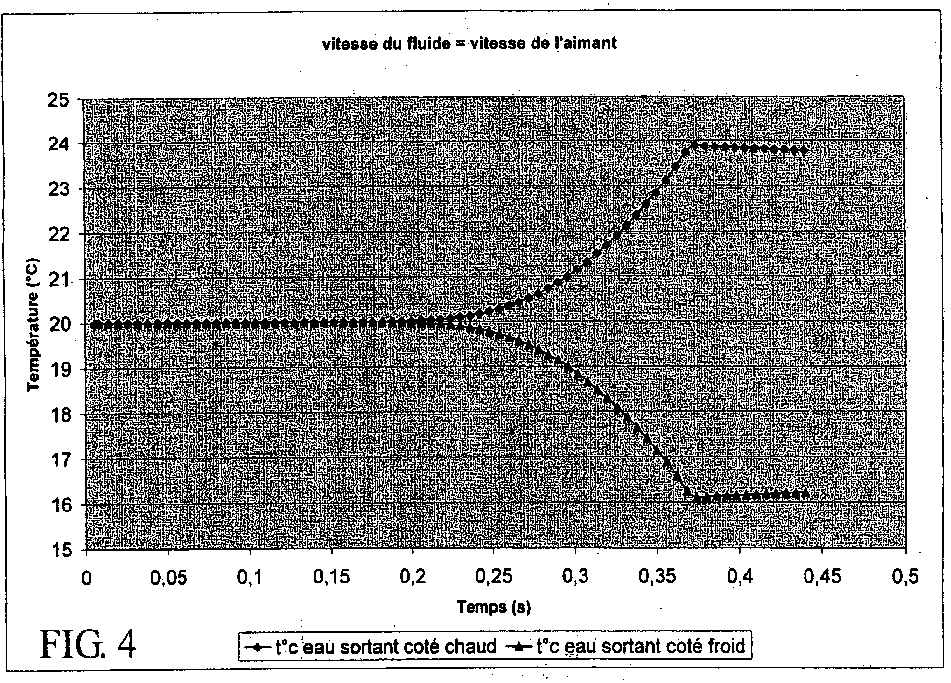

Si la vitesse de circulation du fluide caloporteur et la vitesse de déplacement relatif du champ magnétique sont identiques ou synchronisées, le gradient de température ΔT de tous les éléments magnétocaloriques 60 au cours de leur passage dans le champ magnétique reste le même pour l'ensemble de ces éléments et le fluide caloporteur atteindra un gradient de température de sortie ΔTs égal par exemple à 3,8°C, comme représenté à la figure 4.

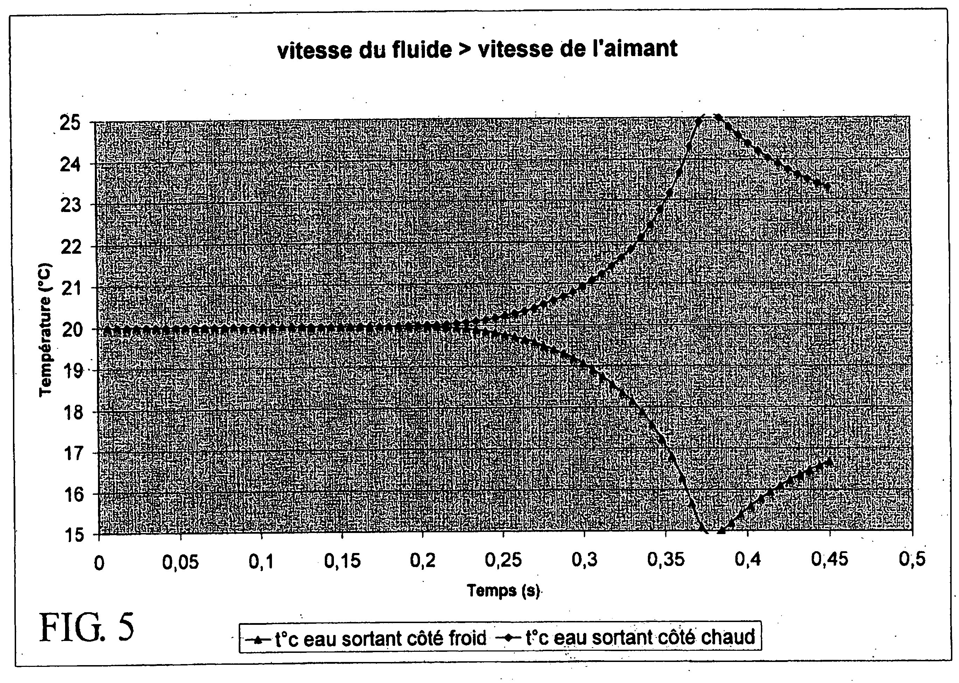

En revanche, si l'on effectue un préchauffage des éléments magnétocaloriques 60 avant ou au cours de leur passage dans le champ magnétique, et/ou un pré refroidissement des éléments magnétocaloriques 60 avant ou au cours de leur passage hors du champ magnétique, en faisant circuler le fluide caloporteur a une vitesse supérieure à la vitesse de déplacement relatif du champ magnétique, le gradient de température de tous les éléments magnétocaloriques 60 sera croissant pour l'ensemble de ces éléments, et le fluide caloporteur atteindra un gradient de température de sortie ΔTs+ supérieur au ΔTs précédent, par exemple égal par exemple à 5,3°C, comme représenté à la figure 5.

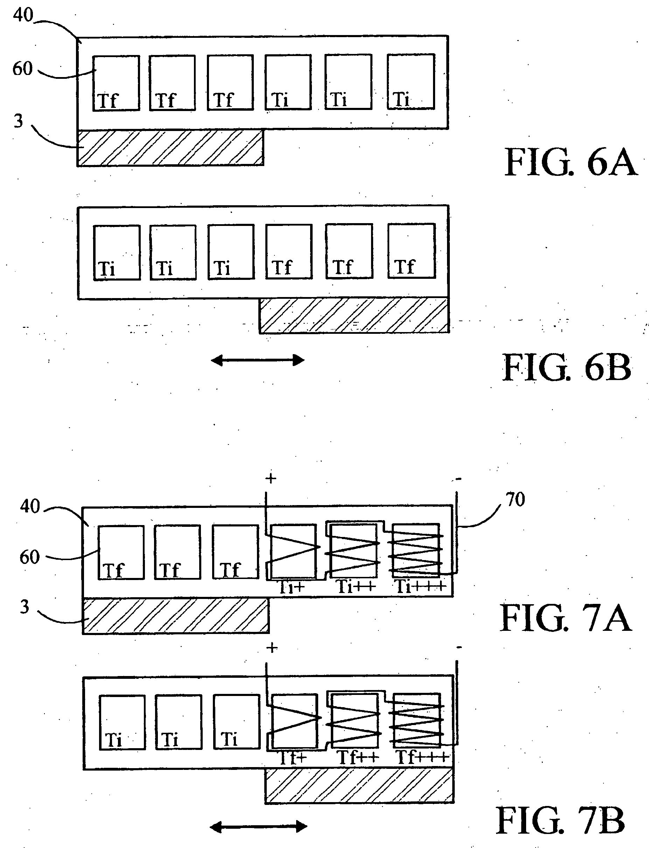

En effet, si la température initiale Ti d'un élément magnétocalorique 60 qui pénètre dans le champ magnétique était par exemple de 20°C et si le ΔT avait une valeur constante de 1°C, la valeur finale Tf de cet élément magnétocalorique 60 serait de 21°C. Dans les générateurs thermiques de ce type connus, les éléments magnétocaloriques 60 suivants auraient tous la même température initiale Ti de 20°C à leur entrée dans le champ magnétique et la même température finale Tf de 21°C à leur sortie de ce champ. Ce phénomène est représenté schématiquement par les figures 6A et 6B. Dans cet exemple, la température initiale des éléments magnétocaloriques 60 non soumis à l'aimant 3 est la même et égale à Ti pour tous les éléments. Lorsqu'ils sont soumis à l'aimant 3 leur température finale passe à une valeur identique et égale à Tf pour tous les éléments, la différence entre Tf et Ti correspondant au gradient de température ΔT déterminé par la nature du matériau magnétocalorique utilisé.

Dans le générateur thermique de l'invention, même si la température initiale Ti du premier élément magnétocalorique qui pénètre dans le champ magnétique était de 20°C et si sa température finale était de 21°C, la température initiale Ti+ du deuxième élément magnétocalorique, qui a subi un préchauffage, serait supérieure à Ti. Si le préchauffage s'effectuait par exemple au moyen du circuit chaud, cette température initiale pourrait être égale à la température finale Tf du premier élément magnétocalorique, soit 21°C. Avec trois éléments successifs, la température finale du troisième élément magnétocalorique pourrait être voisine de 23°C, de sorte que le gradient de température ΔT entre le premier et le troisième éléments serait dans ce cas de 3°C et non de 1°C comme dans les générateurs connus. Ce phénomène est illustré schématiquement par les figures 7A et 7B où le préchauffage des éléments magnétocaloriques 60 est représenté par une résistance électrique, dont le nombre de spires détermine le nombre de degrés apporté à chaque élément. Dans cet exemple et grâce au préchauffage, la température initiale des éléments magnétocaloriques 60 non soumis à l'aimant 3 est respectivement Ti+, Ti++ et Ti+++ où Ti+ < Ti++ < Ti+++. Lorsqu'ils sont soumis à l'aimant 3 leur température finale passe respectivement à Tf+, Tf++ et Tf+++, où Tf+ < Tf++ < Tf+++. Pour un même gradient de température ΔT individuel déterminé par la nature du matériau magnétocalorique utilisé, le gradient de température ΔT entre l'entrée et la sortie de la zone magnétisée sera donc supérieur de quelques degrés par rapport à l'art antérieur (cf. fig. 6A, 6B). On peut bien entendu appliquer ce phénomène au cycle de refroidissement en utilisant le circuit froid pour pré-refroidir les éléments magnétocaloriques 60.

Il est également possible de combiner le préchauffage et le pré-refroidissement des éléments magnétocaloriques 60 à une combinaison de matériaux magnétocaloriques de natures différentes et donc de gradients de températureΔT différents.

La variation de champ magnétique est obtenue par un champ magnétique présent ou absent selon la position des aimants par rapport aux éléments magnétocaloriques 60 comme dans l'exemple représenté, ou par un champ magnétique modulé par tout moyen connu entre une valeur de champ maximale et une valeur de champ minimale, les aimants étant mobiles.

Dans l'exemple représenté, le contrôle de la vitesse de déplacement du champ magnétique s'effectue au moyen de l'actionneur 2a et le contrôle de la vitesse de circulation des fluides caloporteurs des circuits respectivement chaud 31a et froid 32a s'effectue au moyen des pompes de circulation, respectivement 31b et 32b, pilotées par les boîtiers de commande 31c et 32c éventuellement programmables ou commandés par des capteurs. Tout autre mode de réalisation est possible.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Procédé pour accroître le gradient de température dans un générateur thermique magnétocalorique (1) comportant d'une part des éléments magnétocaloriques (60) fixes et des assemblages magnétiques (3) se déplaçant par rapport auxdits éléments magnétocaloriques (60) pour les soumettre alternativement à une variation de champ magnétique entre une valeur de champ maximale et une valeur de champ minimale pour faire varier la température desdits éléments magnétocaloriques (60), et d'autre part des moyens pour collecter les calories et/ou les frigories émises par lesdits éléments magnétocaloriques (60), ces moyens de collecte comportant au moins un circuit (31a, 32a) d'au moins un fluide caloporteur étant une solution liquide circulant dans au moins un canal de circulation desdits éléments magnétocaloriques (60), procédé dans lequel on fait circuler le fluide caloporteur dans une direction parallèle au déplacement des assemblages magnétiques (3) et **caractérisé en ce que** l'on fait circuler ledit fluide caloporteur dans ledit circuit (31a, 32a) à une vitesse de circulation supérieure à la vitesse de déplacement des assemblages magnétiques (3) pour effectuer au moins un préchauffage des éléments magnétocaloriques (60) modifiant leur température initiale avant et/ou pendant la variation de champ magnétique avant d'atteindre la valeur de champ maximale et/ou au moins un pré-refroidissement des éléments magnétocaloriques (60) modifiant leur température initiale avant et/ou pendant la variation de champ magnétique avant d'atteindre la valeur de champ minimale.

2. Procédé, selon la revendication 1, **caractérisé en ce qu'**il consiste à disposer les éléments magnétocaloriques (60) en forme de secteur circulaire autour d'un arbre (2) portant les assemblages magnétiques (3) animés d'un mouvement rotatif.

3. Procédé, selon la revendication 1, **caractérisé en ce qu'**il consiste à disposer les éléments magnétocaloriques (60) linéairement et à animer lesdits assemblages magnétiques (3) selon un mouvement rectiligne.

4. Procédé selon la revendication 1, dans lequel on fait circuler un premier fluide caloporteur dans un premier circuit collecteur dit « chaud » et un deuxième fluide caloporteur dans un deuxième circuit collecteur dit « froid », **caractérisé en ce que** l'on fait circuler ledit premier fluide caloporteur dans le circuit chaud à une vitesse supérieure à la vitesse de déplacement des assemblages magnétiques (3).

5. Procédé selon la revendication 1, dans lequel on fait circuler un premier fluide caloporteur dans un premier circuit collecteur dit « chaud » et un deuxième fluide caloporteur dans un deuxième circuit collecteur dit « froid », **caractérisé en ce que** l'on fait circuler ledit deuxième fluide caloporteur dans le circuit froid à une vitesse supérieure à la vitesse de déplacement des assemblages magnétiques (3).

6. Procédé selon la revendication 4, **caractérisé en ce que** l'on fait varier la vitesse de circulation dudit premier fluide caloporteur dans ledit circuit chaud au moyen d'une pompe de circulation (31b) pilotée par un boîtier de commande (31c).

7. Procédé selon la revendication 5 **caractérisé en ce que** l'on fait varier la vitesse de circulation dudit deuxième fluide caloporteur dans ledit circuit froid au moyen d'une pompe de circulation (32b) pilotée par un boîtier de commande (32c).

8. Procédé selon la revendication 1, **caractérisé en ce que** l'on fait circuler ledit fluide caloporteur dans ledit circuit pour collecter les calories et/ou les frigories émises par lesdits éléments magnétocaloriques (60) à une vitesse supérieure la vitesse de variation de champ magnétique, en modulant la vitesse de déplacement des assemblages magnétiques (3).

9. Dispositif pour accroître le gradient de température dans un générateur thermique magnétocalorique (1) comportant d'une part des éléments magnétocaloriques (60) fixes et des assemblages magnétiques (3) se
déplaçant par rapport auxdits éléments magnétocaloriques (60) pour les soumettre alternativement à une variation de champ magnétique entre une valeur de champ maximale et une valeur de champ minimale pour faire varier la température desdits éléments magnétocaloriques (60), et d'autre part des moyens pour collecter les calories et/ou les frigories émises par lesdits éléments magnétocaloriques (60), ces moyens de collecte comportant au moins un circuit (31a, 32a) d'au moins un fluide caloporteur étant une solution liquide circulant dans au moins un canal de circulation desdits éléments magnétocaloriques (60), **caractérisé en ce qu'**il met en oeuvre le procédé selon l'une quelconque des revendications précédente et comporte à cet effet des moyens pour effectuer au moins un préchauffage et/ou un pré-refroidissement des éléments magnétocaloriques (60) pour modifier leur température initiale avant et/ou pendant la variation de champ magnétique avant d'atteindre la valeur de champ maximale ou minimale en utilisant ledit fluide caloporteur que l'on fait circuler dans ledit circuit (31a, 32a) dans une direction parallèle au déplacement des moyens magnétiques (3) à une vitesse supérieure à la vitesse de déplacement des assemblages magnétiques (3).

10. Dispositif selon la revendication 9, comprenant un premier circuit collecteur dit « chaud » dans lequel circule un premier fluide caloporteur et un deuxième circuit collecteur dit « froid » dans lequel circule un deuxième fluide caloporteur, **caractérisé en ce qu'**il comporte des moyens pour faire circuler ledit premier fluide caloporteur dans le circuit chaud à une vitesse supérieure à la vitesse de déplacement des assemblages magnétiques (3).

11. Dispositif selon la revendication 9, comprenant un premier circuit collecteur dit « chaud » dans lequel circule un premier fluide caloporteur et un deuxième circuit collecteur dit « froid » dans lequel circule un deuxième fluide caloporteur, **caractérisé en ce qu'**il comporte des moyens pour faire circuler ledit deuxième fluide caloporteur dans le circuit froid à une vitesse supérieure à la vitesse de déplacement des assemblages magnétiques (3).

12. Dispositif selon la revendication 10, **caractérisé en ce que** ledit circuit chaud comporte une pompe de circulation (31b) pilotée par un boîtier de commande (31c).

13. Dispositif selon la revendication 11, **caractérisé en ce que** ledit circuit froid comporte une pompe de circulation (32b) pilotée par un boîtier de commande (32c).

14. Dispositif selon la revendication 9, **caractérisé en ce que** ledit générateur thermique (1) comporte un arbre rotatif (2) portant des assemblages magnétiques (3) et un actionneur (2a) agencé pour piloter la vitesse d'entraînement de cet arbre (2) et créer une vitesse de déplacement des assemblages magnétiques (3) différente de la vitesse de circulation dudit fluide caloporteur.

## Patentansprüche

1. Verfahren zur Erhöhung des Temperaturgradienten in einem magnetokalorischen Wärmegenerator (1) mit einerseits festen magnetokalorischen Elementen (60) und magnetischen Anordnungen (3), die sich in Bezug auf besagte magnetokalorische Elemente (60) bewegen, um diese abwechselnd einer Variation des Magnetfelds zwischen einem maximalen Feldwert und einem minimalen Feldwert auszusetzen, um die Temperatur von besagten magnetokalorischen Elementen (60) zu verändern, und andererseits Mittel zum Ansammeln der von besagten magnetokalorischen Elementen (60) entwickelten Kalorien und/oder Frigorien, wobei diese Mittel zum Ansammeln zumindest einen Kreislauf (31a, 32a) mit zumindest einem Wärmeübertragungsfluid betragen, der aus einer flüssigen Lösung besteht, die in zumindest einem Zirkulationskanal von besagten magnetokalorischen Elementen (60) zirkuliert, man lässt das Wärmeübertragungsfluid in einer Richtung parallel zur Bewegung der magnetischen Anordnungen (3) zirkulieren, und **dadurch gekennzeichnet, dass** man besagtes Wärmeübertragungsfluid in besagten Kreislauf (31a, 32a) mit einer höheren Zirkulations-Geschwindigkeit zirkulieren lässt, als die Bewegungs-Geschwindigkeit der magnetischen Anordnungen (3), um die magnetokalorischen Elemente (60) zumindest vor zu wärmen und ihre ursprüngliche Temperatur vor und/oder während der Variation des Magnetfelds zu ändern bevor der maximale Feldwert erreicht wird und/oder die magnetokalorischen Elemente (60) zumindest vor zu kühlen und ihre ursprüngliche Temperatur vor und/oder während der Variation des Magnetfelds zu ändern bevor der minimale Feldwert erreicht wird.

2. Verfahren nach Anspruch 1, **dadurch gekennzeichnet, dass** es darin besteht, die magnetokalorischen Elemente (60) in Form eines Kreissektors um eine Welle (2) herum anzuordnen, die die in Drehung versetzten magnetischen Anordnungen (3) trägt.

3. Verfahren nach Anspruch 1, **dadurch gekennzeichnet, dass** es darin besteht, die magnetokalorischen Elemente (60) linear anzuordnen und besagte magnetische Anordnungen (3) geradlinig zu bewegen.

4. Verfahren nach Anspruch 1, in dem man ein erstes Wärmeübertragungsfluid in einem ersten sogenannten "warmen" Sammelkreislauf und ein zweites Wärmeübertragungsfluid in einem zweiten sogenannten "kalten" Sammelkreislauf zirkulieren lässt, **dadurch gekennzeichnet, dass** man besagtes erstes Wärmeübertragungsfluid in dem warmen Kreislauf mit einer höheren Geschwindigkeit zirkulieren lässt, als die Bewegungs-Geschwindigkeit der magnetischen Anordnungen (3)

5. Verfahren nach Anspruch 1, in dem man ein erstes Wärmeübertragungsfluid in einem ersten sogenannten "warmen" Sammelkreislauf und ein zweites Wärmeübertragungsfluid in einem zweiten sogenannten "kalten" Sammelkreislauf zirkulieren lässt, **dadurch gekennzeichnet, dass** man besagtes zweites Wärmeübertragungsfluid in dem kalten Kreislauf mit einer höheren Geschwindigkeit zirkulieren lässt, als die Bewegungs-Geschwindigkeit der magnetischen Anordnungen (3)

6. Verfahren nach Anspruch 4, **dadurch gekennzeichnet, dass** man die Zirkulations-Geschwindigkeit von besagten ersten Wärmeübertragungsfluid in besagtem warmem Kreislauf mit Hilfe einer durch eine Steuereinheit (31c) gesteuerten Zirkulationspumpe (31b) verändert.

7. Verfahren nach Anspruch 5, **dadurch gekennzeichnet, dass** man die Zirkulations-Geschwindigkeit von besagten zweiten Wärmeübertragungsfluid in besagtem kaltem Kreislauf mit Hilfe einer durch eine Steuereinheit (32c) gesteuerten Zirkulationspumpe (32b) verändert.

8. Verfahren nach Anspruch 1, **dadurch gekennzeichnet, dass** man zum Sammeln der von besagten magnetokalorischen Elementen (60) erzeugten Kalorien und/oder Frigorien besagtes Wärmeübertragungsfluid in besagtem Kreislauf mit einer Geschwindigkeit zirkulieren lässt, die höher ist, als die Änderungsgeschwindigkeit des Magnetfeldes, wobei man die Bewegungs-Geschwindigkeit der magnetischen Anordnungen (3) moduliert.

9. Vorrichtung zur Erhöhung des Temperaturgradienten in einem magnetokalorischen Wärmegenerator (1) mit einerseits festen magnetokalorischen Elementen (60) und magnetischen Anordnungen (3), die sich in Bezug auf besagte magnetokalorische Elemente (60) bewegen, um diese abwechselnd einer Variation des Magnetfelds zwischen einem maximalen Feldwert und einem minimalen Feldwert auszusetzen, um die Temperatur von besagten magnetokalorischen Elementen (60) zu verändern, und andererseits Mittel zum Ansammeln der von besagten magnetokalorischen Elementen (60) entwickelten Kalorien und/oder Frigorien, wobei diese Mittel zum Ansammeln zumindest einen Kreislauf (31a, 321b) mit zumindest einem Wärmeübertragungsfluid betragen, der aus einer flüssigen Lösung besteht, die in zumindest einem Zirkulationskanal von besagten magnetokalorischen Elementen (60) zirkuliert, **dadurch gekennzeichnet, dass** sie das Verfahren nach einem beliebigen der vorhergehenden Ansprüche einsetzt und zu diesem Zweck Mittel beträgt, um die magnetokalorischen Elemente (60) zumindest vor zu wärmen und/oder vor zu kühlen, um ihre ursprüngliche Temperatur vor und/oder während der Variation des Magnetfelds zu ändern bevor der maximale oder minimale Feldwert erreicht wird, wofür besagtes Wärmeübertragungsfluid verwendet wird, das man in besagtem Kreislauf (31a, 32a) in eine Richtung parallel sur Bewegung der magnetischen Anordnungen (3) zirkulieren lässt, mit einer höheren Geschwindigkeit als die Bewegungs-Geschwindigkeit der magnetischen Anordnungen (3).

10. Vorrichtung nach Anspruch 9, mit einem ersten sogenannten "warmen" Sammelkreislauf, im dem ein erstes Wärmeübertragungsfluid zirkuliert und mit einem zweiten sogenannten "kalten" Sammelkreislauf, im dem ein zweites Wärmeübertragungsfluid zirkuliert, **dadurch gekennzeichnet, dass** sie Mittel beträgt, um besagtes erstes Wärmeübertragungsfluid mit einer höheren Geschwindigkeit als die Bewegungs-Geschwindigkeit der magnetischen Anordnungen (3) in dem warmen Kreislauf zirkulieren zu lassen.

11. Vorrichtung nach Anspruch 9, mit einem ersten sogenannten "warmen" Sammelkreislauf, im dem ein erstes Wärmeübertragungsfluid zirkuliert und mit einem zweiten sogenannten "kalten" Sammelkreislauf, im dem ein zweites Wärmeübertragungsfluid zirkuliert, **dadurch gekennzeichnet, dass** sie Mittel beträgt, um besagtes zweites Wärmeübertragungsfluid mit einer höheren Geschwindigkeit als die Bewegungs-Geschwindigkeit der magnetischen Anordnungen (3) in dem kalten Kreislauf zirkulieren zu lassen.

12. Vorrichtung nach Anspruch 10, **dadurch gekennzeichnet, dass** besagter warmer Kreislauf eine durch eine Steuereinheit (31c) gesteuerte Zirkulationspumpe (31b) beträgt.

13. Vorrichtung nach Anspruch 11, **dadurch gekennzeichnet, dass** besagter kalter Kreislauf eine durch eine Steuereinheit (32c) gesteuerte Zirkulationspumpe (32b) beträgt.

14. Vorrichtung nach Anspruch 9, **dadurch gekennzeichnet, dass** besagter Wärmegenerator (1) eine drehende Welle (2) beträgt, die magnetische Anordnungen (3) und einen Antrieb (2a) trägt, der ausgelegt ist, um die Antriebsgeschwindigkeit dieser Welle (2) zu steuern und eine Bewegungs-Geschwindigkeit der magnetischen Anordnungen (3) zu erzeugen, die verschieden von der Zirkulations-Geschwindigkeit von besagtem Wärmeübertragungsfluid ist.

## Claims

1. Process for increasing the temperature gradient in a magnetocaloric thermal generator (1) comprising on the one hand fixed magnetocaloric elements (60) and magnetic assemblies (3) moving relative to magnetocaloric elements (60) to alternatively submit them to a magnetic field variation between a maximum field value and a minimum field value to make the temperature of said magnetocaloric elements (60) vary, and on the other hand means for collecting calories and/or frigories emitted by the magnetocaloric elements (60), these means for collecting comprising at least one circuit (31a, 32a) with at least one heat transfer fluid being a liquid solution circulating in at least one circulation channel of said magnetocaloric elements (60), the process wherein one makes the heat transfer fluid circulate in a direction parallel to the motion of the magnetic assemblies (3), and characterized that one makes the heat transfer fluid circulate in the said circuit (31a, 32a) at a speed greater than the motion speed of the magnetic assemblies (3) to perform at least one of pre-heating the magnetocaloric elements (60) to modify their initial temperature before and/or during the magnetic field variation before reaching the maximum field value and/or at least one of pre-cooling the magnetocaloric elements (60) to modify their initial temperature before and/or during the magnetic field variation before reaching the minimum field value.

2. Process according to claim 1, **characterized in that** it consists of arranging the magnetocaloric elements (60) in the form of circular sector around a shaft (2) carrying the magnetic assemblies (3) driven by a rotation motion.

3. Process according to claim 1, **characterized in that** it consists of arranging the magnetocaloric elements (60) in a linear manner and driving the said magnetic assemblies (3) in a rectilinear movement.

4. Process according to claim 1, wherein one makes a first heat transfer fluid circulate in a first collector circuit (hot) and a second heat transfer fluid circulate in a second collector circuit (cold), **characterized in that** one makes the first heat transfer fluid circulate within the first collector circuit at a speed greater than the motion speed of the magnetic assemblies (3).

5. Process according to claim 1, wherein one makes a first heat transfer fluid circulate in a first collector circuit (hot) and a second heat transfer fluid circulate in a second collector circuit (cold), **characterized in that** one makes the second heat transfer fluid circulate within the second collector circuit at a speed greater than the motion speed of the magnetic assemblies (3).

6. Process according to claim 4, **characterized in that** one makes the circulation speed of the first heat transfer fluid vary in the first collector circuit via a circulation pump (31b) driven by a control box (31c).

7. Process according to claim 5, **characterized in that** one makes the circulation speed of the second heat transfer fluid vary in the second collector via a circulation pump (32b) driven by a control box (32c).

8. Process according to claim 1, **characterized in that** one makes the heat transfer fluid circulate in the collector circuit to collect the calories and/or the frigories emitted by the magnetocaloric elements (60) at a speed greater than the motion speed of the magnetic field, by modulating a motion speed of the magnetic assemblies (3).

9. Device for increasing the temperature gradient in a magnetocaloric thermal generator (1) comprising on the one hand fixed magnetocaloric elements (60) and magnetic assemblies (3) moving relative to magnetocaloric elements (60) to alternatively submit them to a magnetic field variation between a maximum field value and a minimum field value to make the temperature of the magnetocaloric elements (60) vary, and on the other hand means for collecting calories and/or frigories emitted by the said magnetocaloric elements (60), these means for collecting comprising at least one circuit (31a, 32a) with at least one heat transfer fluid being a liquid solution circulating in at least one circulation channel of said magnetocaloric elements (60), **characterized in that** it implements the process according to any of the previous claims and for this purpose comprises means for performing at least a pre-heating and/or a pre-cooling of the magnetocaloric elements (60) to modify their initial temperature before and/or during the magnetic field variation before reaching the maximum or the minimum field value by using said heat transfer fluid that is circulated in the said circuit (31a, 32a) in a direction parallel to the motion of the magnetic means (3) at a speed greater than the motion speed of magnetic assemblies (3).

10. Device according to claim 9, comprising a first collector circuit (hot) in which a first transfer fluid circulates and a second collector circuit (cold) in which a second heat transfer fluid circulates, **characterized in that** it comprises means for circulating the first heat transfer fluid within the first collector circuit (hot) at a speed greater than the motion speed of magnetic assemblies (3).

11. Device according to claim 9, comprising a first collector circuit (hot) in which a first heat transfer fluid circulates and a second collector circuit (cold) in which a second heat transfer fluid circulates, **characterized in that** it comprises means for circulating the second heat transfer fluid in the second collector circuit (cold) at a speed greater than the motion speed of magnetic assemblies (3).

12. Device according to claim 10, **characterized in that** said hot circuit comprises a circulation pump (31b) driven by a control box (31c).

13. Device according to claim 11, **characterized in that** said cold circuit comprises a circulation pump (32b) driven by a control box (32c).

14. Device according to claim 9, **characterized in that** the thermal generator (1) comprises a rotating shaft (2) carrying magnetic assemblies (3) and an actuator (2a) arranged to control the driving speed of this shaft (2) and create a motion speed of magnetic assemblies (3) different from the circulation speed of the heat transfer fluid.
